**Europäisches Patentamt**

**European Patent Office**

**Office européen des brevets**

(11) Veröffentlichungsnummer : **0 419 947 B1**

(12) # EUROPÄISCHE PATENTSCHRIFT

(45) Veröffentlichungstag der Patentschrift :
**01.03.95 Patentblatt 95/09**

(51) Int. Cl.$^6$ : **G02B 6/12**

(21) Anmeldenummer : **90117580.2**

(22) Anmeldetag : **12.09.90**

(54) Optischer Schicht- oder Streifenwellenleiter mit einer dielektrischen wellenleitenden Schicht.

(30) Priorität : **22.09.89 DE 3931705**

(43) Veröffentlichungstag der Anmeldung :
**03.04.91 Patentblatt 91/14**

(45) Bekanntmachung des Hinweises auf die
Patenterteilung :
**01.03.95 Patentblatt 95/09**

(84) Benannte Vertragsstaaten :
**DE FR GB IT NL**

(56) Entgegenhaltungen :
**IEEE JOURNAL OF QUANTUM ELECTRONICS,
Bd. QE-11, Nr. 9, September 1975, New York,
US, Seiten 729-736 ; Y. YAMAMOTO et al. :
"Characteristics of optical guided modes in
multilayer metal-clad planar optical guide with
low-index dielectric buffer layer'**

(56) Entgegenhaltungen :
**IEEE JOURNAL OF QUANTUM ELECTRONICS,
Bd. QE-13, Nr. 4, April 1977, New York, US,
Seiten 141-145 ; K. H. ROLLKE et al. :
"Metal-clad waveguide as cutoff polarizer for
integrated optics"
APPLIED PHYSICS LETTERS, Bd. 53, Nr. 22,
28. November 1988, New York, US, Seiten
2141-2142 ; Y. NAKAGAWA et al. : "New
excitation method of surface polaritons"
IEEE JOURNAL OF QUANTUM ELECTRONICS,
Bd. 25, Nr. 6, Juni 1989, New York, US, Seiten
1209-1213 ; Y. TONG et al. : "Theoretical study
of metal-clad optical waveguide polarizer"
ELECTRONICS AND COMMUNICATIONS IN
JAPAN, Bd. 71, Nr. 5, Mai 1988, New York, US,
Seiten 48-52 ; I. KATO et al. : Multilayer thinfilm waveguide polarizer with metal cladding'**

(73) Patentinhaber : **SIEMENS
AKTIENGESELLSCHAFT
Wittelsbacherplatz 2
D-80333 München (DE)**

(72) Erfinder : **Cremer, Cornelius, Dr.
Bayrischzeller Strasse 29
D-8000 München 90 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 419 947 B1

## Beschreibung

Die Erfindung betrifft einen optischen Schicht- oder Streifenwellenleiter nach dem Oberbegriff des Patentanspruchs 1.

Ein Wellenleiter der genannten Art ist aus IEEE Journal of Quantum Electronics, Vol. QE-11, S. 729-736 und Vol. QE-13, S. 141-145 bekannt.

Bauelemente für die optische Nachrichtentechnik sollten in den meisten Anwendungsfällen polarisationsunabhängig sein, da die aus einer zuführenden Glasfaser empfangene Strahlung im allgemeinen eine unbekannte Polarisation aufweist.

Die Ausbreitungsgeschwindigkeit des im Bauelement geführten Lichts ist jedoch in optischen Schicht- oder Streifenwellenleitern mit einer dielektrischen wellenleitenden Schicht polarisationsabhängig, was ein Problem u.a. für wellenlängenselektive Bauteile der integrierten Optik darstellt. Bei diesen Wellenleitern hat das in der wellenleitenden Schicht geführte TM-polarisierte Licht eine größere Ausbreitungskonstante als das in dieser Schicht geführte TE-polarisierte Licht. Diese Differenz der Ausbreitungsgeschwindigkeiten für das TM- und TE-polarisierte Licht läßt sich durch eine Verringerung des Brechzahlsprungs zwischen der wellenleitenden Schicht und deren Umgebung vermindern. Um jedoch überhaupt eine optisch führende wellenleitende Schicht zu erhalten, ist ein endlicher Brechzahlsprung nötig und damit auch eine gewisse Polarisationsabhängigkeit der effektiven Brechzahl der wellenleitenden Schicht unvermeidbar.

Aufgabe der Erfindung ist es, aufzuzeigen, wie ein optischer Schicht- oder Streifenwellenleiter mit einer einen Brechzahlsprung gegen die Umgebung aufweisenden wellenleitenden Schicht zu gestalten ist, damit die Differenz zwischen der Ausbreitungsgeschwindigkeit des TE- polarisierten Lichts und der Ausbreitungsgeschwindigkeit des TM- polarisierten Lichts in der wellenleitenden Schicht verkleinert ist.

Diese Aufgabe wird durch die im Patentanspruch 1 angegebenen Merkmale gelöst.

Der erfindungsgemäße Wellenleiter ermöglicht bei richtiger Dimensionierung das Verschwinden der genannten Differenz und beruht auf folgender Erkenntnis: Bringt man eine Metallschicht nahe an die dielektrische wellenleitende Schicht, so lassen sich die in dieser Schicht geführten elektrischen bzw. magnetischen Felder für jede der beiden zueinander orthogonalen Polarisationen (TE, TM) unterschiedlich beeinflussen derart, daß das TE- polarisierte Licht und das TM- polarisierte Licht die gleiche Ausbreitungsgeschwindigkeit in der wellenleitenden Schicht haben, so daß diese Schicht für die TE- Polarisation die gleiche effektive Brechzahl $n_{eff}$ wie für die TM-Polarisation hat.

Der gezielte Einfluß auf nur eine Polarisationsrichtung durch Metallschichten gelingt, weil sich an Metallgrenzflächen sog. Oberflächenplasmonen, die nur für die TM- Polarisation existieren, ausbreiten können. Die Ausbreitungskonstante der Plasmonen ist im wesentlichen durch die Metallschichtdicke, die Dielektrizitätskonstante des Metalls und die Dielektrizitätskonstanten der umgebenden Dielektrika gegeben. Wählt man die geeigneten Materialien und Schichtdicken, so können Plasmonen erzeugt werden, die sich synchron mit den TM- polarisierten Photonen der wellenleitenden Schicht ausbreiten. Durch Wechselwirkung zwischen diesen beiden Teilchenarten können dann die TM- Photonen der dielektrischen wellenleitenden Schicht "abgebremst" werden. Für Metallschichten von etwa 10 nm bleiben die TE- und TM- polarisierten Photonen noch ausbreitungsfähig und die Zusatzdämpfung der geführten Welle kann in den Bereich von 5 dB/cm gedrückt werden.

Die Metallschichten auf dielektrischen Wellenleitern zur Realisierung von Polarisatoren sind bereits mehrfach untersucht worden. Dabei wird entweder die TM- Mode durch ohmsche Verluste im Metall (siehe Y.Yamamoto, T. Kamiya, H. Yanai: Characteristics of Optical Guided Modes in Multilayer Metal-Clad Planar Optical Guide with Low-Index Dielectric Buffer Layer, IEEE Journal of Quantum Electronics QE-11 (1975) 729) absorbiert oder die TE- Mode durch das Metall unter dem Cut-off des dielektrischen Wellenleiters gebracht (siehe K.H. Rollke, W. Sohler: Metal-Clad Waveguide as Cutoff-Polarizer for Integrated Optics, IEEE Journal of Quantum Electronics QE-13 (1977) 141. Plasmonen andererseits sind an metallbeschichteten Gittern (siehe J.J..Cowan, E. T. Arakawa: Dispersion of Surface Plasmons in Multiple Metal and Dielectric Layers on Concave Gratings, phys.stat.sol. (a) 1 (1970) 695) und bei Prismeneinkopplung von Licht in Metallschichten beobachtet worden (siehe A. Otto: Excitation of Nonradiative Surface Plasma Waves in Silver by the Method of Frustrated Reflection, Zeitschrift f. Physik 216 (1968) 398).

Es sei noch darauf hingewiesen, daß die Ausbreitung von Licht in Medien mit Dämpfung durch eine komplexe Brechzahl beschrieben wird, die einen Realteil und einen Imaginärteil aufweist. Bei schwach dämpfenden dielektrischen Medien überwiegt der Realteil den Imaginärteil. Letzterer ist bei einem dämpfungsfreien dielektrischen Medium gleich null, so daß die Brechzahl eines solchen Mediums nur durch den Realteil ausgedrückt werden kann. Bei schwachdämpfenden Metallen überwiegt der Imaginärteil den Realteil. Letzter ist bei dämpfungsfreien Metallen gleich null, so daß die Brechzahl eines solchen Metalls allein durch den Imaginärteil ausgedrückt werden kann.

An jeder Grenzfläche zwischen einem Metall mit einem Imaginärteil $n'_l$ seiner komplexen Brechzahl $n_l$ und

einem dielektrischen Medium mit einem Realteil $n'_k$ seiner komplexen Brechzahl $n_k$ können nur Oberflächenplasmonen mit einer effektiven Brechzahl $n_{kl} = (n'^{-2}_k - n'^{-2}_1)^{-1/2}$ an dieser Grenzfläche geführt werden. Diese Oberflächenplasmonen haben die gleiche Polarisation wie TM- polarisierten Photonen eines dielektrischen Wellenleiters. Damit sich Oberflächenplasmonen ausbreiten können, muß der Betrag des Imaginärteils der komplexen Brechzahl des Metall größer als der Realteil der komplexen Brechzahl des angrenzenden dielektrischen Mediums sein. Oberflächenplasmonen sind z.B. an Grenzschichten zwischen Silber und Glas beobachtet worden (siehe oben IEEE QE-11 und Zeitschrift für Physik 216 (1968) S. 398). Für eine Grenzschicht zwischen Silber und Indiumsphosphid ergibt sich bei einer Lichtwellenlänge von 1,5 µm für das Plasmon beispielsweise eine effektive Brechzahl von 3,387.

Für eine zwischen zwei dielektrische Medien eingebettete dielektrische wellenleitende Schicht ergibt sich, wenn die Realteile der komplexen Brechzahlen des Materials oder der Materialien dieser Medien jeweils kleiner als der Realteil der komplexen Brechzahl des Materials der wellenleitenden Schicht sind, für die in dieser Schicht geführte TE- polarisierte Welle eine größere effektive Brechzahl als für die in dieser Schicht geführte TM- polarisierte Welle. Beispielsweise ergibt sich für eine in InP eingebettete wellenleitende Schicht aus InGaASP mit einer Gap-Wellenlänge von 1,05 µm für die effektive Brechzahl für die TE- polarisierte Welle und für die effektive Brechzahl für die TM- polarisierte Welle eine Differenz von etwa 0,001.

Um die Photonen einer in einer dielektrischen wellenleitenden Schicht geführten TM- polarisierten Welle gezielt durch Oberflächenplasmonen beeinflussen zu können, muß für die effektive Brechzahl dieser wellenleitenden Schicht genau genommen für die TM- polarisierte Welle gelten, daß diese effektive Brechzahl entweder kleiner als die kleinere der beiden effektiven Brechzahlen für die Oberflächenplasmonen an den Grenzflächen zwischen der Metallschicht und den diese Schicht angrenzenden dielektrischen Medien oder größer als die größere dieser beiden effektiven Brechzahlen für die Oberflächenplasmonen gewählt ist.

Alle vorstehenden Forderungen lassen sich aus einer allgemein bekannten imaginären Dispersionsgleichung (siehe J.N. Polky, G.L. Mitchel: Metal-Clad Planar Dielectric Waveguide for Integrated Optics, J.Opt.Soc.Am.64 (1974) 274)) ableiten.

Um in einer wellenleitenden Schicht geführte Photonen durch Oberflächenplasmonen zu beeinflussen, müssen beide Teilchenarten die gleiche Ausbreitungsgeschwindigkeit, d.h. die effektive Brechzahl haben.

Damit Licht sich mit einer von der Polarisation unabhängigen Ausbreitungsgeschwindigkeit in einer wellenleitenden Schicht eines Schicht- oder Streifenwellenleiters ausbreiten kann, müssen mindestens vier unterschiedliche, bei dämpfenden Materialien komplexe Brechzahlen $n_1, n_2, n_3, n_4$ vorhanden sein, von denen einer die Brechzahl eines Metalls sein muß. Eine hinreichende Bedingung dafür, daß die Ausbreitungsgeschwindigkeit des Lichts in der wellenleitenden Schicht von der Polarisation unabhängig ist, besteht in der Bemessung der Schichtdicke $t_3$ der Metallschicht, die im wesentlichen gleich

$$U_3 t_3 = \tan^{-1}(U_4 n_3^2 / i U_3 n_4^2) -$$

$$- \tan^{-1}\left\{(U_2 n_3^2 / U_3 n_2^2)\tan\left(\tan^{-1}(U_3/U2)\tan\left[\tan^{-1}(U_4/iU_3) -\right.\right.\right.$$

$$\left.\left.\left. - U_3 t_3\right] + \tan^{-1}(U_1/iU_2) - \tan^{-1}(U_1 n_2^2 / i U_2 n_1^2)\right)\right\}$$

zu wählen ist, wobei $U_j = 2\pi/\lambda(n_j^2 - n_{eff}^2)^{1/2}$ mit $j = 1,2,3,4$, $\lambda$ die Wellenlänge des in der wellenleitenden Schicht geführten Lichts und $i$ die imaginäre Einheit bedeuten.

Bevorzugte und vorteilhafte Ausgestaltungen des erfindungsgemäßen Wellenleiters gehen aus den Unteransprüchen hervor.

Die Erfindung wird anhand der Figur in der nachfolgenden Beschreibung näher erläutert. Die Figur zeigt einen Schnitt durch ein Ausführungsbeispiel eines erfindungsgemäßen polarisationsunabhängigen Wellenleiters.

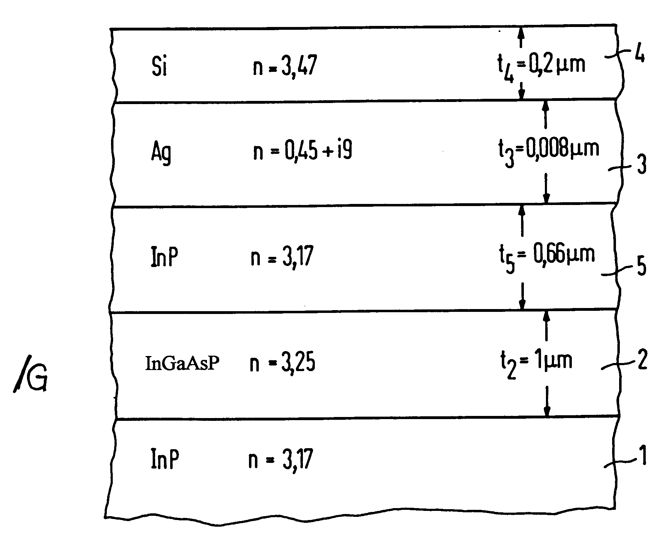

Der Wellenleiter nach Figur 1 besteht im wesentlichen aus einem Substrat 1 aus InP mit einer darauf aufgebrachten wellenleitenden Schicht 2 aus InGaAsP, einer über der wellenleitenden Schicht 2 angeordneten Metallschicht 3 aus Silber und aus einer auf der Metallschicht 3 aufgebrachten Deckschicht 4 aus InP oder Si. Der Realteil der komplexen Brechzahl von InP ist 3,17, jener von InGaAsP ist 3,25, jeweils bei 1,5 µm Lichtwellenlänge. Die komplexe Brechzahl von Silber ist 0,45 + i9 (siehe oben IEEE QE 13). Silber hat danach eine nur geringe Zusatzdämpfung. Da Silber gewählt ist, muß der Realteil der komplexen Brechzahl des Materials der Deckschicht 4 etwa bei drei liegen. InP erfüllt diese Forderung. Auch Si kann für die Deckschicht 4 verwendet werden, da der Realteil der komplexen Brechzahl von Si bei 3,47 liegt, wobei diese Deckschicht 4 dünn sein, beispielsweise eine Schichtdicke von etwa 200 nm haben muß. Die Deckschicht 4 aus Si könnte aufgesputtert werden, ist zu dünn um einen dielektrischen Wellenleiter zu bilden und wirkt auf Plasmonen mit $n_{eff}$ = 3,22 wie eine Deckschicht aus InP.

Um Verluste im dielektrischen Wellenleiter, die infolge der Dämpfung der Plasmonen in der Metallschicht entstehen, gering zu halten, ist zusätzlich eine Pufferschicht 5 aus InP zwischen der wellenleitenden Schicht 2 und der Metallschicht 3 angeordnet, wodurch nur ein kleiner Teil des in der wellenleitenden Schicht 2 geführten Lichts im Metall gedämpft wird. Wählt man für die wellenleitende Schicht 2 eine Dicke $t_2$ von 1 µm, dann können die Dicke $t_5$ der Pufferschicht 5 und die Dicke $t_3$ der Metallschicht 3 so variiert werden, daß die effektiven Brechzahlen der TE- Mode und der TM- Mode gleich sind.

In einem konkreten Beispiel besteht die 1 µm wellenleitende Schicht 2 aus $In_{0,89} Ga_{0,11} As_{0,24} P_{0,76}$ Der Realteil $n'_2$ der komplexen Brechzahl $n_2$ dieses Materials beträgt 3,25 bei 1,5 µm Lichtwellenlänge. Die Pufferschicht 5 aus InP hat eine Dicke $t_5$ von 0,66 µm und kann durch Flüssigphasenepitaxie aufgebracht werden. Die durch Aufdampfen auf die Pufferschicht 5 aufbringbare Metallschicht 3 aus Silber hat eine Dicke $t_3$ von 0,008 µm. Die durch Aufsputtern auf die Metallschicht 3 aufgebrachte Deckschicht 4 besteht aus Silizium.

Man kann zusätzlich in das Substrat 1 aus InP ein Bragggitter mit einer Gitterkonstanten $\Lambda$ = 0,24 µm ätzen, um direkt die effektive Brechzahl dieses Wellenleiters an der Wellenlänge des Braggreflexes ermitteln zu können.

Die Transmission von einem konventionellen Wellenleiter in einen erfindungsgemäßen Wellenleiter ist vorteilhafterweise höher als 99 %. Es brauchen daher nur die wellenlängenselektiven Elemente mit einer Metallschicht versehen zu werden.

## Patentansprüche

1. Optischer Schicht- oder Streifenwellenleiter bestehend aus:
   einer dielektrischen wellenleitenden Schicht (2) und
   einer Metallschicht (3),
   - die so nahe an der wellenleitenden Schicht (2) angeordnet ist, daß von den in der wellenleitenden Schicht (2) ausbreitungsfähigen TE- und TM- polarisierten optischen Wellen die Ausbreitungskonstanten der TM- polarisierten Wellen durch die Metallschicht (3) verringert ist, und
   - deren Dicke ($t_3$) so dünn gewählt ist, daß die TE- und TM-polarisierten Wellen in der wellenleitenden Schicht (2) noch ausbreitungsfähig sind,
   **dadurch gekennzeichnet**,
   daß die wellenleitende Schicht (2) auf einem Substrat (1) aus InP aufgebracht ist und aus InGaAsP besteht, daß die Metallschicht (3) aus Silber besteht und eine Dicke ($t_3$) von 8 ± 5 nm aufweist,
   daß ein auf der Metallschicht (3) auf der von der wellenleitenden Schicht (2) abgekehrten Seite auf gebrachtes dielektrische Medium (4) eine reelle Brechzahl größer als 3 hat, und
   daß die Dicke ($t_3$) der Metallschicht (3) so gewählt ist, daß die Ausbreitungskonstanten der TE- und TM- Wellen im wesentlichen übereinstimmen.

2. Wellenleiter nach Anspruch 1,
   **dadurch gekennzeichnet**,
   daß das dielektrische Medium (4) eine Schicht aus In oder Si ist.

3. Wellenleiter nach Anspruch 1 oder 2,
   **dadurch gekennzeichnet**,
   daß die Metallschicht (3) durch eine dielektrische Pufferschicht (5) von der wellenleitenden Schicht (2) getrennt ist.

4. Wellenleiter nach einem der vorhergehenden Ansprüche,
   **dadurch gekennzeichnet**,
   daß die Pufferschicht (5) aus InP besteht.

## Claims

1. Optical layer or strip waveguide, comprising: a dielectric waveguiding layer (2) and a metal layer (3) which is arranged so near the waveguiding layer (2) that, of the TE-polarized and TM-polarized optical waves which can propagate in the waveguiding layer (2), the TM-polarized waves have their propagation constant reduced by the metal layer (3), whose thickness ($t_3$) is selected to be so small that the TE-polarized and TM-polarized waves can still be propagated in the waveguiding layer (2), characterized in that the waveguiding layer (2) is applied to a substrate (1) made from InP and comprises InGaAsP, in that the metal layer (3) comprises silver and has a thickness ($t_3$) of $8 \pm 5$ nm, in that a dielectric medium (4) applied to the metal layer (3) on the side averted from the waveguiding layer (2) has a real refractive index of greater than 3, and in that the thickness ($t_3$) of the metal layer (3) is selected such that the propagation constant of the TE-waves and TM-waves are essentially the same.

2. Waveguide according to Claim 1, characterized in that the dielectric medium (4) is a layer made from In or Si.

3. Waveguide according to Claim 1 or 2, characterized in that the metal layer (3) is separated from the waveguiding layer (2) by a dielectric buffer layer (5).

4. Waveguide according to one of the preceding claims, characterized in that the buffer layer (5) comprises InP.

## Revendications

1. Guide d'ondes optiques en forme de couche ou de bande, constitué par :
   - une couche diélectrique (2) de guidage des ondes et une couche métallique (3),
   - qui est disposée suffisamment près de la couche (2) de guidage des ondes pour que parmi les ondes optiques de polarisation TE et TM, aptes à se propager dans la couche (2) de guidage des ondes, les constantes de propagation des ondes à polarisation TM soient réduites par la couche métallique (3), et
   - dont l'épaisseur ($t_3$) est choisie suffisamment petite pour que les ondes de polarisation TE et TM soient encore aptes à se propager dans la couche (2) de guidage des ondes,
   
   caractérisé par le fait
   
   que la couche (2) de guidage des ondes est déposée sur un substrat (1) en InP et est en InGaAsP,
   
   que la couche métallique (3) est en argent et a une épaisseur ($t_3$) égale à $8 \pm 5$ nm,
   
   qu'un milieu diélectrique (4) déposé sur la couche métallique (3), sur la face tournée à l'opposé de la couche (2) de guidage des ondes, a un indice de réfraction réel supérieur à 3, et
   
   que l'épaisseur ($t_3$) de la couche métallique (3) est choisie de telle sorte que les constantes de propagation des ondes TE et TM coïncident sensiblement.

2. Guide d'ondes suivant la revendication 1, caractérisé par le fait que le milieu diélectrique (4) est une couche en In ou en Si.

3. Guide d'ondes suivant la revendication 1 ou 2, caractérisé par le fait que la couche métallique (3) est séparée de la couche (2) de guidage des ondes par une couche tampon diélectrique (5).

4. Guide d'ondes suivant l'une des revendications précédentes, caractérisé par le fait que la couche tampon (5) est en InP.

*IG*

| | | | |
|---|---|---|---|
| Si | $n = 3{,}47$ | $t_4 = 0{,}2\,\mu m$ | 4 |
| Ag | $n = 0{,}45 + i9$ | $t_3 = 0{,}008\,\mu m$ | 3 |
| InP | $n = 3{,}17$ | $t_5 = 0{,}66\,\mu m$ | 5 |
| InGaAsP | $n = 3{,}25$ | $t_2 = 1\,\mu m$ | 2 |
| InP | $n = 3{,}17$ | | 1 |